# EUROPÄISCHE PATENTSCHRIFT

(11) **EP 1 419 430 B1**
(45) Veröffentlichungstag und Bekanntmachung des Hinweises auf die Patenterteilung: **29.12.2010**
(21) Anmeldenummer: 02722261.1
(22) Anmeldetag: 21.03.2002
(51) Int. Cl.: G06F 1/20

(54) **COMPUTERGEHÄUSE**
COMPUTER HOUSING
BOITIER D'ORDINATEUR

(30) Priorität: 21.03.2001 DE 10113877; 06.07.2001 DE 10132311
(43) Veröffentlichungstag der Anmeldung: 19.05.2004
(73) Patentinhaber: Hush Technologies Investments Ltd., London SE1 9QR (GB)
(72) Erfinder: FRITSCHLE, Claus, 70197 Stuttgart (DE); HEESEN, Klaus, 70195 Stuttgart (DE)
(74) Vertreter: Rummler, Felix
(86) Internationale Anmeldenummer: PCT/EP2002/003205
(87) Internationale Veröffentlichungsnummer: WO 2002/075510

(56) Entgegenhaltungen:
- EP-A- 1 085 795
- WO-A-99/11108
- DE-U- 29 704 885
- DE-U- 29 908 672
- US-B1- 6 234 240

## Beschreibung

Die vorliegende Erfindung betrifft ein Computergehäuse mit einer rechten und einer linken Seitenwand, einer Vorderwand, einer Rückwand und einem Netzteil, das zumindest ein Wärme erzeugendes Leistungsbauelement aufweist.

Computergehäuse der vorgenannten Art sind allgemein bekannt. Sie werden üblicherweise mit einem durch einen Lüfter gekühlten Netzteil ausgeliefert und weisen Aufnahmevorrichtungen auf, um die für einen Computer notwendigen Bauteile, wie beispielsweise Motherboard, Laufwerke etc. einbauen zu können. Mit der zunehmenden Leistungsfähigkeit moderner Prozessoren geht eine zunehmende Leistungsaufnahme der Bauelemente einher. Dies bedeutet jedoch auch, daß die Prozessoren immer mehr Wärme erzeugen, die zur Vermeidung von Schäden schnell und gleichmäßig über die gesamte Prozessorfläche abgeführt werden muß. Durch die gestiegene Leistungsaufnahme des Prozessors muß auch das Netzteil dieser Leistung angepaßt werden, so daß auch hier zusätzliche Maßnahmen getroffen werden müssen, um die erzeugte Wärme abführen zu können.

Bisher erfolgte diese Wärmeabfuhr im wesentlichen durch den Einsatz von Lüftern, wobei für das Netzteil und den Prozessor jeweils ein eigener Lüfter vorgesehen wird. Obgleich sich diese Lösung in der Praxis bewährt hat, hat sich mittlerweile das Problem ergeben, daß die Lüfter einen Geräuschpegel erzeugen, der für den Anwender bzw. Nutzer des Computers unangenehm wird. Darüber hinaus führt die hohe Leistung der Lüfter zu einem hohen Luftdurchsatz innerhalb des Computergehäuses, was zu dem weiteren Problem führt, daß die im Computergehäuse angeordneten Bauelemente sehr schnell verschmutzen. Gerade Festplatten und optische Laufwerke sind gegenüber Schmutz und Staub empfindlich, so daß es zu Beschädigungen kommen kann.

Vor diesem Hintergrund besteht die Aufgabe der vorliegenden Erfindung darin, das Computergehäuse der vorgenannten Art so weiterzubilden, daß die vorgenannten Probleme überwunden werden.

Diese Aufgabe wird von dem eingangs genannten Computergehäuse dadurch gelöst, daß die beiden Seitenwände jeweils einen Kühlkörper tragen, wobei die beiden Kühlkörper einander diagonal gegenüberliegen, das Netzteil benachbart der Vorderwand angeordnet ist, wobei das Leistungsbauelement mit einem der beiden Kühlkörper wärmegekoppelt ist, und eine Flüssigkeits-Kühleinrichtung für einen Prozessor mit dem anderen der beiden Kühlkörper wärmegekoppelt ist.

Ein solches Computergehäuse ermöglicht es, auf den Einsatz von Lüftern innerhalb des Gehäuses vollständig zu verzichten. Die von dem Netzteil erzeugte Wärme wird durch direkte Wärmekopplung an einen der beiden Kühlkörper aus dem Computergehäuse nach außen transportiert, während die von einem Prozessor erzeugte Wärme über eine Flüssigkeits-Kühleinrichtung an den anderen Kühlkörper abgegeben wird. Dadurch, daß die beiden Kühlkörper einander diagonal gegenüberliegen, ergibt sich eine optimale Wärmeverteilung innerhalb des Computergehäuses, so daß es nicht zu übermäßig heißen Bereichen am Computergehäuse kommt, die den Benutzer ansonsten irritieren könnten und ergibt sich, daß die gesamte Wärmeleistung über die Kühlkörper und das Computergehäuse abgegeben werden kann.

Mit einem solchen Computergehäuse läßt sich ein Computer aufbauen, bei dem man ohne den Einsatz von Lüftern auskommt, so daß die einzige Geräuschquelle die Festplatte darstellt. Moderne Festplatten sind mittlerweile jedoch so leise geworden, daß diese von dem Benutzer kaum noch wahrgenommen werden.

Darüber hinaus führt der Verzicht auf Lüfter dazu, daß der Luftaustausch zwischen Computergehäuseinnenraum und der Umgebung minimal ist. Damit läßt sich ein mit einem solchen Computergehäuse aufgebauter Computer auch in Umgebungen einsetzen, in denen die Luft stark verunreinigt ist.

In einer Weiterbildung des erfindungsgemäßen Computergehäuses ist die Flüssigkeits-Kühleinrichtung als Heat-Pipe-Kühleinrichtung ausgebildet.

Diese Maßnahme hat den Vorteil, daß ein sehr guter Wärmetransport zum Kühlkörper möglich ist, wobei auf Standardbauteile, wie die Heat-Pipe, zurückgegriffen werden kann.

In einer bevorzugten Weiterbildung sind die Kühlkörper integraler Bestandteil der Seitenwände.

Diese Maßnahme hat den Vorteil, daß sich der Wärmetransport vom Kühlkörper auf die übrigen Bereiche des Gehäuses gegenüber einer Lösung, bei der der Kühlkörper auf die Seitenwand aufgebracht wird, deutlich verbessern läßt. So ist es möglich, nicht nur die Kühlkörper alleine zur Abfuhr der Wärme zu nutzen, sondern auch die anderen Bereiche der Seitenwände, der Vorderwand und auch der Rückwand.

In einer bevorzugten Weiterbildung erstreckt sich der Kühlkörper im wesentlichen über die Hälfte einer Seitenwand und ist die andere Hälfte der Seitenwand so ausgelegt, daß sie einen guten Wärmetransport ermöglicht.

Diese Dimensionierung von Kühlkörpern und Seitenwand, die vorzugsweise eine Wanddicke von mehreren Millimetern aufweist, hat sich in der Praxis als besonders vorteilhaft herausgestellt.

In einer bevorzugten Weiterbildung ist der Kühlkörper der linken Seitenwand der Vorderwand benachbart und der Kühlkörper der rechten Seitenwand der Rückwand benachbart, wobei das Leistungsbauelement des Netzteils mit dem Kühlkörper der linken Seitenwand wärmegekoppelt ist.

Diese Maßnahme hat den Vorteil, daß ein einfacher Aufbau eines Computers möglich ist. Insbesondere kann auf Standard-Motherboards (Hauptplatinen; beispielsweise ATX-Platinen) zurückgegriffen werden. Bei diesen Platinen ist der Sockel für den Prozessor üblicherweise auf der rechten Seite vorgesehen, so daß der Weg von Prozessor zu Kühlkörper sehr kurz ausfällt.

In einer bevorzugten Weiterbildung befindet sich der außen liegende Endbereich des Kühlkörpers in einer Ebene mit dem übrigen Bereich der Seitenwand, so daß der Kühlkörper gegenüber der Seitenwand nicht übersteht.

Diese Maßnahme hat den Vorteil, daß einerseits ein ästhetisch ansprechendes Gehäuse erzielt wird und andererseits die Gefahr reduziert wird, daß der Benutzer an den Kühlkörpern hängen bleibt.

In einer bevorzugten Weiterbildung ist eine Deckplatte vorgesehen, die im Bereich der Kühlkörper eine Aussparung aufweist.

Diese Maßnahme hat den Vorteil, daß die Luft optimal an den Kühlrippen der Kühlkörper von unten nach oben vorbeiströmen kann, ohne daß die Deckplatte diese sich ergebende Strömung blockiert.

In einer bevorzugten Weiterbildung ist zumindest eine Aufnahme für ein Disketten- und/oder optisches Laufwerk derart vorgesehen, daß das Laufwerk über dem Netzteil anordbar ist.

Diese Maßnahme hat den Vorteil, daß ein sehr kompaktes Computergehäuse mit einer Grundfläche von ca. 300 x 350 mm und einer Höhe von 70 mm aufbaubar ist, ohne auf den Einsatz von notwendigen Computerkomponenten wie Laufwerke, Festplatten etc. verzichten zu müssen.

In einer bevorzugten Weiterbildung weist die Vorderwand eine ausreichende Dicke auf, um einen guten Wärmetransport bereitzustellen. Vorzugsweise ist das Computergehäuse insgesamt aus Aluminium hergestellt.

Diese Maßnahmen haben sich in bezug auf die Kühlleistung als besonders vorteilhaft herausgestellt. Darüber hinaus bekommt das Computergehäuse durch die entsprechend dick gewählten Seitenwände und Vorderwand eine sehr hohe Stabilität, so daß es in der Praxis keinerlei Schwierigkeiten bereitet, auch sehr schwere Monitore auf das Gehäuse aufzustellen.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand des Ausführungsbeispiels mit Bezug auf die Zeichnung näher erläutert. Dabei zeigen:
- Fig. 1: eine schematische Draufsicht eines Computergehäuses mit abgenommener Deckplatte;
- Fig. 2: eine schematische Draufsicht eines Computergehäuses mit aufgesetzter Deckplatte;
- Fig. 3: eine schematische Vorderansicht des Computergehäu- ses;
- Fig. 4: eine perspektivische Darstellung einer Seitenwand;
- Fig. 5: eine schematische draufsicht eines Computergehäuses gemäß einer weiteren Ausführungsform;
- Fig. 6: eine schematische Darstellung einer Befestigung ei- nes Kühlkörpers auf einem Prozessor, und
- Fig. 7: eine schematische Darstellung einer Halteplatte, die in Fig. 6 gezeigt ist.

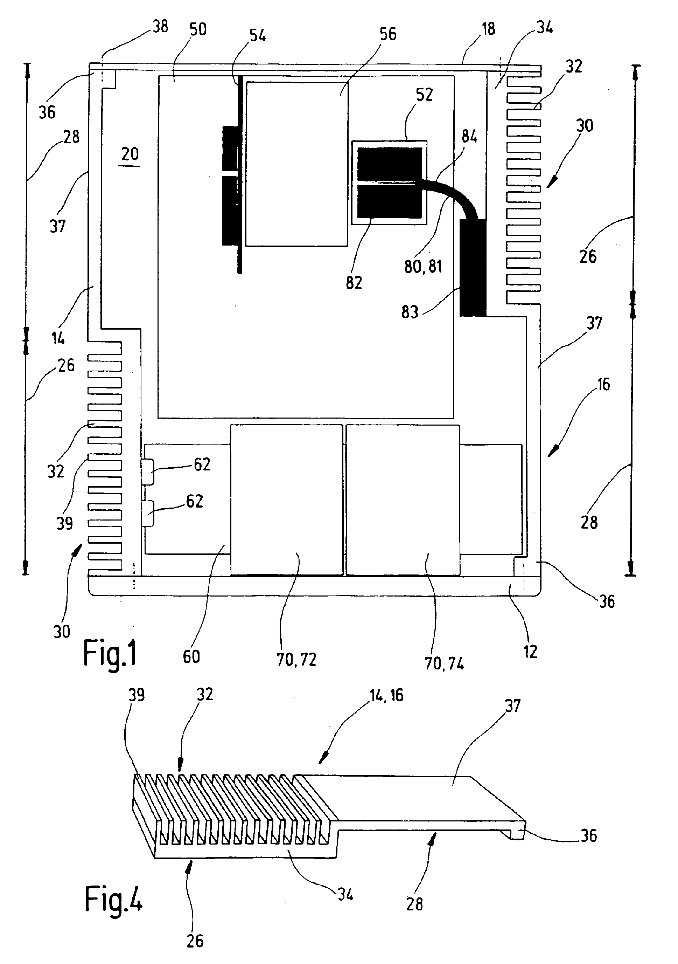

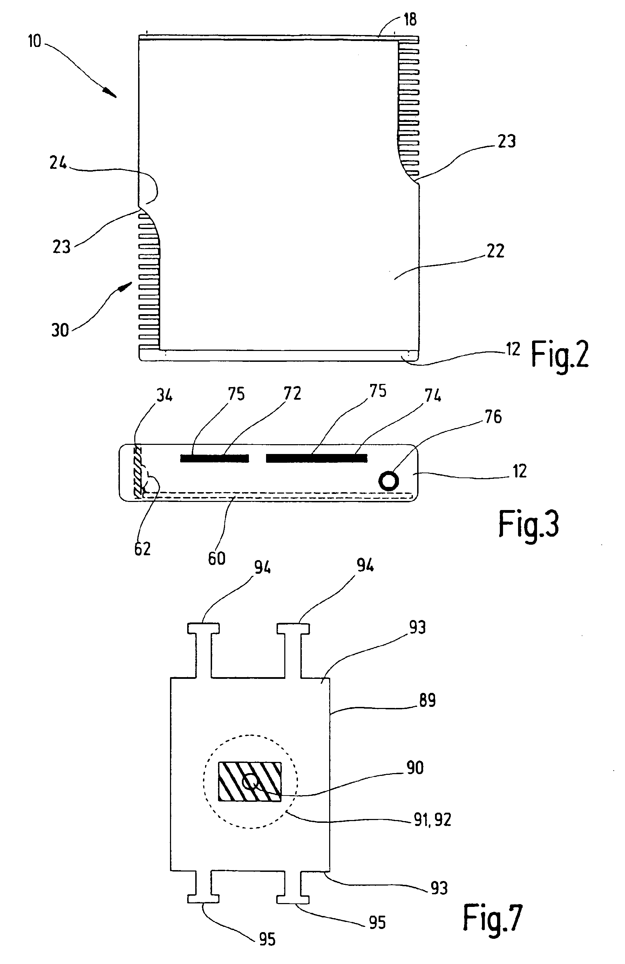

In Fig. 1 ist ein Computergehäuse in Draufsicht dargestellt und mit dem Bezugszeichen 10 gekennzeichnet. Das Computergehäuse 10 weist eine Vorderwand 12, eine linke Seitenwand 14, eine rechte Seitenwand 16 und eine Rückwand 18 auf. Die Wände sind rechtwinklig zueinander angeordnet und umgeben eine im wesentlichen rechteckige Grundfläche. Die vier Wände 12 bis 18 sind beispielsweise mittels Schrauben miteinander verbunden. Selbstverständlich sind auch andere Verbindungsarten möglich. Der von den Wänden 12 bis 18 umschlossene Raum wird nach unten von einer Bodenplatte 20 und nach oben von einer Deckplatte 22 begrenzt. Aus Übersichtlichkeitsgründen ist in Fig. 1 die Deckplatte 22 (Fig. 2) nicht dargestellt.

Im Innenraum des Computergehäuses 10 ist eine Hauptplatine 50 (Motherboard) angrenzend an die Rückwand 18 angeordnet. Es handelt sich bei dieser Hauptplatine 50 um ein Standard-Motherboard (ATX), das in der rechten Hälfte einen Sockel 52 zur Aufnahme eines Prozessors und in der linken Hälfte mehrere Steckplätze (nicht dargestellt) aufweist. In einem dieser Steckplätze ist eine sogenannte Risercard 54 eingesteckt, die dazu dient, den Steckplatz für die Aufnahme einer Steckkarte (beispielsweise Grafikkarte) in horizontaler Lage umzulenken. Ferner ist in Fig. 1 eine Festplatte 56 dargestellt, die über der Hauptplatine 50 angeordnet ist.

Das Computergehäuse 10 umfaßt ferner ein Netzteil 60, das eine längliche Form aufweist und angrenzend an die Vorderwand 12 im Gehäuse angeordnet ist. Das Netzteil 60 erstreckt sich im wesentlichen über die gesamte Innenraum-Breite, die durch die beiden Seitenwände 14, 16 begrenzt wird. Das Netzteil 60 ist sehr flach gehalten, so daß über dem Netzteil 60 Laufwerke 70, beispielsweise ein Diskettenlaufwerk 72 und ein CD-ROM-Laufwerk 74, Platz finden. Zum Einschieben der entsprechenden Medien sind in der Vorderwand 12 entsprechende Schlitze vorgesehen.

Die Seitenwand 14 gliedert sich in zwei Längsabschnitte, nämlich einen ersten Längsabschnitt 26 und einen zweiten Längsabschnitt 28. Der erste Längsabschnitt 26 ist als Kühlkörper 30 ausgebildet und weist hierfür eine Vielzahl von Kühlrippen 32 auf. Die Kühlrippen sind in Längsrichtung gleichmäßig beabstandet angeordnet und erstrecken sich senkrecht zur Bodenplatte 20, d.h. senkrecht zur Zeichenebene in Fig. 1. Die Kühlrippen 32 werden von einer Trägerplatte 34 getragen. Im vorliegenden Ausführungsbeispiel ist der Kühlkörper 30 einstückig ausgebildet. Zur Verdeutlichung des Aufbaus der Seitenwand 14 ist in Fig. 4 die Seitenwand 14 perspektivisch dargestellt.

Der zweite Längsabschnitt 28 bildet ein übliches Wandelement 37, das in Längserstreckung im wesentlichen die gleiche Dicke aufweist. Lediglich in einem Endbereich 36 ist die Dicke etwas größer gewählt, um eine schematisch dargestellte Schraubverbindung 38 zu ermöglichen.

Aus den Fig. 1 und 4 ergibt sich, daß die Trägerplatte 34 gegenüber dem Wandelement 37 des zweiten Längsabschnitts zurück (d.h. in den Innenraum des Gehäuses 10) versetzt ist. Das Maß dieses Versatzes wird entsprechend der Höhe der Kühlrippen 32 gewählt, so daß das Wandelement 37 und die Enden 39 der Kühlrippen 32 in einer Ebene liegen.

Im vorliegenden Ausführungsbeispiel ist die Seitenwand 14 mit ihrem ersten Längsabschnitt 26 an der Seitenwand 12 angebracht, so daß der Kühlkörper 30 an die Seitenwand 12 angrenzt.

Im Gegensatz dazu ist die Seitenwand 16, die identisch zu der Seitenwand 14 aufgebaut ist, mit ihrem zweiten Längsabschnitt 28 an der Vorderwand 12 befestigt. Damit grenzt der Kühlkörper 30 der rechten Seitenwand 16 an der Rückwand 18 an. In Draufsicht betrachtet liegen die beiden Kühlkörper 32 somit einander diagonal gegenüber.

In der Fig. 1 ist eine Kühleinrichtung 80 dargestellt, die bevorzugt als sog. Heat-Pipe 81 ausgelegt ist. Die Funktionsweise einer solchen Heat-Pipe 81 ist allgemein bekannt, so daß darauf nicht weiter eingegangen werden muß. Die Heat-Pipe 81 umfaßt einen ersten Körper 82, der auf einen im Sockel 52 eingesteckten Prozessor aufgebracht wird, und einen zweiten Körper 83, der an der Trägerplatte 34 des Kühlkörpers 30 der rechten Seitenwand 16 angebracht ist. Zwischen den beiden Körpern 82, 83 fließt über eine Leitung 84 ein Kühlmittel, um die Wärme vom ersten Körper 82 zu dem zweiten Körper 83 und damit zum Kühlkörper 30 zu transportieren. Die über die Heat-Pipe 81 an die Trägerplatte 34 übertragene Wärme wird über die Kühlrippen 32 nach außen abgestrahlt. Darüber hinaus dient auch der zweite Längsabschnitt 28, d.h. das Wandelement 37 als Medium zur Wärmeabstrahlung nach außen.

Der Kühlkörper 30 der linken Seitenwand 14 dient dazu, die von dem Netzteil 60 produzierte Wärme nach außen zu übertragen. Hierzu ist das Netzteil 60 so ausgelegt, daß die Wärme produzierenden Elemente in einem der linken Seitenwand 14 zugewandten Abschnitt angeordnet sind. Insbesondere sind die Hauptwärmequellen, nämlich Leistungstransistoren 62, direkt an der Trägerplatte 34 angebracht, wie dies in Fig. 1 deutlich zu erkennen ist. Damit wird die von den Leistungstransistoren 62 erzeugte Wärme direkt auf die Trägerplatte 34 und dann auf die Kühlkörper 32 übertragen, um auf diese Weise eine ausreichende Kühlung des Netzteils zu erreichen. Darüber hinaus dient auch hier das Wandelement 37 der Seitenwand 14 als Medium zur Abgabe von Wärme.

Um sehr heiße Flächenbereiche zu vermeiden, sind insbesondere die Wandelemente 37 als auch die Vorderwand 12 hinsichtlich ihrer Dicke so gewählt, daß ein guter und hoher Wärmetransport ermöglicht wird. Die übliche Wanddicke von Computergehäusen reicht hierfür nicht aus. Die Wanddicke der Wandelemente 37 kann durchaus im Bereich von 3 mm oder mehr liegen.

Sowohl die Seitenwände 14, 16 als auch die Vorderwand 12 sind aus Aluminium hergestellt. Selbstverständlich sind auch andere Materialien denkbar, die allerdings gute Wärmeleitfähigkeitseigenschaften aufweisen müssen. Die Rückwand 18 sowie die Bodenplatte 20 und die Deckplatte 22 lassen sich auch aus einem üblichen Blechmaterial herstellen, da insbesondere ihre Dicke deutlich geringer ist als die der Seitenwände 14, 16.

In Fig. 2 ist das Computergehäuse 10 mit aufgesetzter Deckplatte 22 in Draufsicht dargestellt. Die Deckplatte 22 als auch die Bodenplatte 20 sind so ausgebildet, daß sie den Innenraum des Computergehäuses 10 nach oben bzw. unten vollständig begrenzen. Um jedoch im Bereich der Kühlkörper 30 eine Luftströmung in senkrechter Richtung (vertikal zur Zeichenebene) zu ermöglichen, sind in diesem Bereich in beide Platten 20, 22 Ausnehmungen 23 vorgesehen. Diese Ausnehmungen 23 erstrecken sich über die gesamte Länge der entsprechenden Längsabschnitte 26 der beiden Seitenwände 14, 16. Die Tiefe der Ausnehmungen 23 entspricht der Höhe der Kühlrippen 32, wobei die Tiefe im Übergangsbereich 24 jedoch parabelförmig zunimmt, so daß eine Stabilitätserhöhung erreicht wird. Die Deckplatte 22 als auch die Bodenplatte 20 wird üblicherweise mit den beiden Seitenwänden 14, 16 verschraubt, wobei diese Verschraubung in Fig. 2 nicht dargestellt ist.

In Fig. 3 ist das Computergehäuse 10 von vorne gezeigt, wobei zur Orientierung das Netzteil 60 (d.h. die Schaltplatine des Netzteils 60), ein Leistungstransistor 62 sowie die Trägerplatte 34 gestrichelt dargestellt sind. In der Vorderwand 12 sind Schlitze 75 eingebracht, die mit entsprechenden Aufnahmeschlitzen der Laufwerke 72, 74 fluchten. Ferner ist in Fig. 3 noch ein Ein/Aus-Schalter 76 zu erkennen, der im rechten Bereich der Vorderwand 12 angeordnet ist.

Aus der Fig. 3 wird ersichtlich, daß das Netzteil 60 unterhalb der eingebauten Laufwerke 70 angeordnet ist. Das Netzteil 60 benötigt im Bereich der Laufwerke 70 lediglich eine Bauhöhe von etwa 45 mm, so daß man mit einer Gesamthöhe des Computergehäuses von etwa 70 mm auskommt. Folglich ist ein sehr kompaktes Computergehäuse möglich.

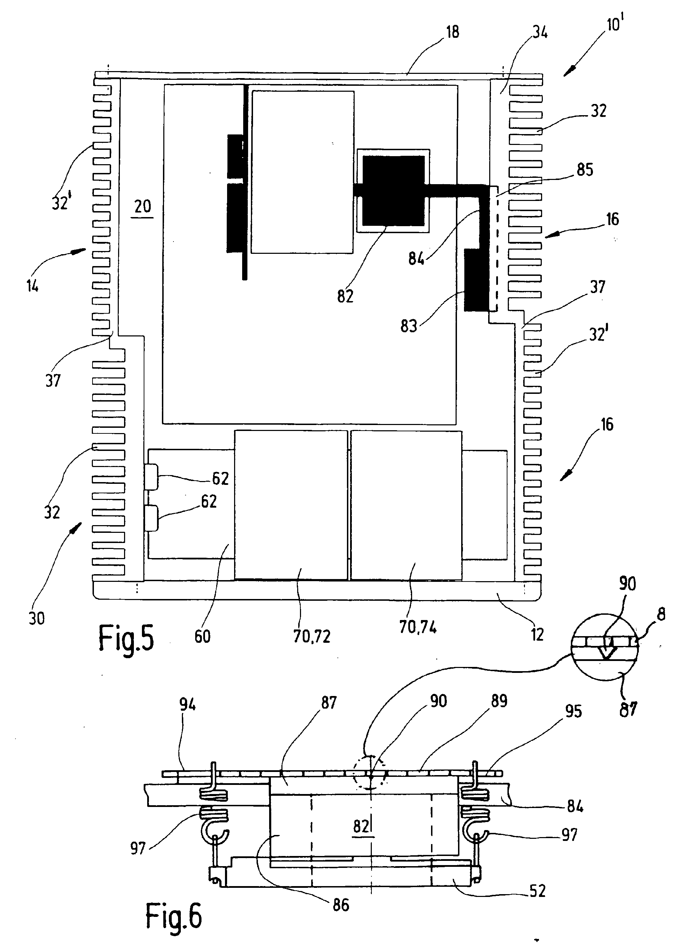

Ein weiteres Beispiel eines Computergehäuses ist in Fig. 5 gezeigt und mit dem Bezugszeichen 10' gekennzeichnet. Dieses Computergehäuse 10' entspricht im wesentlichen dem bereits mit Bezug auf die Fig. 1 beschriebenen Computergehäuse 10, wobei für gleiche Teile die gleichen Bezugszeichen verwendet werden. Auf eine nochmalige Beschreibung dieser Teile kann somit verzichtet werden.

Ein wesentlicher Unterschied des Computergehäuses 10' besteht darin, daß die Wandelemente 37 ebenfalls mit Kühlrippen 32' versehen sind. Damit entstehen zwei Seitenwände 14, 16, die über ihre gesamte Längserstreckung Kühlrippen aufweisen. Die Kühlrippen 32' sind jedoch weniger tief als die Kühlrippen 32 ausgebildet, so daß deren äußere Kanten auf einer Linie mit den äußeren Kanten der Kühlrippen 32 liegen.

Das zusätzliche Vorsehen von Kühlrippen 32' an den Wandelementen 37 führt zu einer weiteren Verbesserung der Kühlung, die unter Umständen bei Prozessoren großer Leistung nötig wird.

Ein weitere Unterschied besteht in der Ausgestaltung der Trägerplatte 34 der rechten Seitenwand 16. Die Trägerplatte 34 weist an ihrer Innenseite eine Vertiefung 85 auf, die sich - aus fertigungstechnischen Gründen - vorzugsweise über die gesamte Länge der Trägerplatte 34 erstreckt. Die Form dieser Vertiefung 85 ist so gewählt, daß zumindest ein Teilumfang der Leitung 84 aufgenommen werden kann. Damit ist es möglich, die Leitung 84 der Kühlvorrichtung 80 in die Vertiefung 85 hineinzulegen, so daß ein großflächiger Kontakt (maximal über den halben Umfang) mit der Trägerplatte 34 geschaffen wird. Zur Befestigung der Leitung 84 an der Trägerplatte 34 ist der Körper 83 vorgesehen, der ebenfalls eine - nicht dargestellte - Vertiefung zur Aufnahme des über die Trägerplatte 34 hinausstehenden Bereichs der Leitung 84 ausgebildet ist.

Diese Maßnahme hat insgesamt den Vorteil, daß die Wärmeübertragungsfläche zu der Trägerplatte 34 weiter erhöht wird, so daß sich infolgedessen auch die Wärmeabfuhr aus der Kühlvorrichtung 80 über den Kühlkörper nach außen verbessert.

Die Leitung 84 ist an dem dem Körper 83 gegenüberliegenden Ende in dem Körper 82 aufgenommen. Der Körper 82 weist hierfür zwei aufeinander liegende Teile 86, 87 auf, die an ihren zugewandten Flächen halbkreisförmige Vertiefungen aufweisen, in denen die Leitung 84 aufgenommen ist. Dies ist in Fig. 6 gut zu erkennen. Um eine optimale Wärmeübertragung von dem auf dem Sockel 52 aufgesteckten Chip zu dem Körper 82 herzustellen, wird der Körper 82 mit einer definierten Kraft auf den Chip aufgedrückt. Vorzugsweise ist im Bereich der größten Wärmeentwicklung des Chips ein Kupferkern in den Körper 82 eingelassen. Aufgrund der besseren Wärmeleitfähigkeit des Kupferkerns kann die im Chip entstehende Wärme schneller abgeführt werden.

Die Kraftbeaufschlagung des Körpers 82 erfolgt über eine Metallplatte 89, die auf dem oberen Teil 87 aufliegt. Die Auflage erfolgt jedoch nicht über die gesamte Fläche des Teils 87, sondern nur punktförmig in der Mitte des Teils 87. Die punktförmige Auflage ist mit dem Bezugszeichen 90 gekennzeichnet.

Die Form der Platte 89 ist in Fig. 7 nochmals dargestellt. Deutlich zu erkennen ist der als spitzer Kegel ausgebildete Auflagepunkt 90, der an der Unterseite der Platte 89 etwas hervorspringt und bspw. in Form einer angespitzten Wurmschraube realisiert ist, um die erwähnte punktförmige Auflage zu erreichen. Durch die gewählte spitze Form ist die Auflagefläche extrem klein. Der gestrichelt dargestellte Kreis 91 soll andeuten, daß in diesem Bereich an der Unterseite des Körpers 82 der bereits erwähnte Kupferkern eingebracht ist.

Die Platte 89 selbst verfügt an ihren beiden Längsenden 93 über jeweils zwei identische Befestigungsarme 94 bzw. 95, wobei die Befestigungsarme 94 an der einen Längsseite etwas länger ausgebildet sind als die gegenüberliegenden Arme 95.

An diesen Befestigungsarmen 94 bzw. 95 werden Federn 97 eingehängt, wie dies in Fig. 6 zu erkennen ist. Die Federn 97 werden an der gegenüberliegenden Seite an dem Sockel 52 befestigt, so daß die Platte 89 zum Sockel 52 hingezogen wird. Die Zugkraft der Federn ist hierbei so auszuwählen, daß die Drehmomente um den Auflagepunkt 90 ausgeglichen sind.

Diese Art der Befestigung des Körpers 82 führt zu einer optimalen Wärmeübertragung von dem Chip bzw. dem Prozessor auf den Körper 82 und folglich auf das in der Leitung 84 fließende Kühlmittel. Insbesondere läßt sich mit der punktförmigen Kraftübertragung in den Mittelpunkt des Körpers 82 ein Verkippen desselben relativ zu dem Sockel 52 und damit dem Chip vermeiden. Der Körper 82 liegt vielmehr vollflächig auf dem zu kühlenden Chip auf, so daß ein optimaler Wärmeübergang geschaffen wird.

Der Wärmeübergang wird darüber hinaus dadurch gesteigert, daß der Körper 82 den bereits erwähnten Kupferkern aufweist, der sich durch den gesamten Körper erstreckt, d.h. von der Unterseite des Körpers 82 zu dessen Oberseite. Der Kupferkern hat somit direkten Kontakt zu dem Heat-Pipe-System. Eine weitere Verbesserung der Wärmeübertragung vom Chip auf den Kupferkern wird dadurch erreicht, daß die Oberfläche des Kupferkerns nicht poliert sondern gefräst wird. Die hierdurch entstehende Oberflächerauhigkeit hat sich als besonders vorteilhaft herausgestellt. Im übrigen ist es vorteilhaft, daß den Kupferkern umgebende Material so zu wählen, daß es eine schlechtere Wärmeleitfähigkeit als der Kupferkern besitzt.

In den Figuren ist nicht zu sehen, daß die Rückwand 18 des Computergehäuses 10, 10' kleine Schlitze aufweisen kann, um einen gewissen Luftaustausch zu ermöglichen. Die Schlitze sind dabei nahe der Deckplatte angeordnet. Selbstverständlich lassen sich diese Schlitze auch an anderen Stellen des Gehäuses anbringen, bspw. an der Bodenplatte, der Vorderwand oder der Rückwand, oder bevorzugt auch in der Deckplatte.

Nach alledem zeigt sich, daß sich durch die spezielle Ausgestaltung der beiden Seitenwände 14, 16, der Verwendung einer Heat-Pipe 80 zur Kühlung eines Prozessors und der speziellen Ausgestaltung des Netzteils 60 ein Computer realisieren läßt, der völlig lüfterlos arbeitet. Der Wärmetransport aus dem Inneren des Computergehäuses erfolgt über die Seitenwände 14, 16 und insbesondere über die Kühlkörper 30. In der Praxis hat sich gezeigt, daß diese Kühlung für einen normalen Betrieb des Computers vollkommen ausreicht. Darüber hinaus lassen sich in das erfindungsgemäße Computergehäuse 10, 10' Standardplatinen (Motherboards) einbauen, so daß das Computergehäuse 10, 10' universell und flexibel eingesetzt werden kann. Ein wesentlicher Beitrag zu der Kühlleistung der Heat-Pipe liefert die beschriebene Art der Befestigung des Körpers 82. Das punktförmige Aufbringen der Anpreßkraft führt zu der gewünschten vollflächigen planen Auflage des Kupferkerns auf dem Chip.

Selbstverständlich lassen sich auch mehrere des beschriebenen Heat-Pipe-Systems in ein Computergehäuse integrieren, entweder zur Kühlung eines Prozessors oder zur Kühlung mehrerer Prozessoren. Darüber hinaus ist es auch möglich, Heat-Pipe-Systeme zur Kühlung anderer Wärmequellen einzusetzen, bspw. zur Kühlung von Bauteilen einer Grafikkarte. Vorzugsweise wird das weitere Heat-Pipe-System in diesem Fall mit jener Seitenwand wärmegekoppelt, die zur Kühlung des Netzteils dient.

## Patentansprüche

1. Computergehäuse mit einer rechten und einer linken Seitenwand (16, 14), einer Vorderwand (12), einer Rückwand (18) und einem Netzteil (60), das zumindest ein wärmeerzeugendes Leistungsbauelement (62) aufweist, **dadurch gekennzeichnet, daß** die beiden Seitenwände (14, 16) jeweils einen Kühlkörper (30) tragen, wobei die beiden Kühlkörper (30) einander diagonal gegenüber liegen, das Netzteil (60) benachbart der Vorderwand (12) angeordnet ist, wobei das Leistungsbauelement (62) mit einem der beiden Kühlkörper (30) wärmegekoppelt ist, und eine Flüssigkeits-Kühleinrichtung (80) für einen Prozessor mit dem anderen der beiden Kühlkörper (30) wärmegekoppelt ist.

2. Computergehäuse nach Anspruch 1, **dadurch gekennzeichnet, daß** die Flüssigkeits-Kühleinrichtung (80) als Heat-Pipe-Kühleinrichtung (81) ausgebildet ist.

3. Computergehäuse nach Anspruch 1 oder 2, **dadurch gekennzeichnet, daß** die Kühlkörper (30) integraler Bestandteil der Seitenwände (14, 16) sind.

4. Computergehäuse nach Anspruch 3, **dadurch gekennzeichnet, daß** sich die Kühlkörper (30) über die Hälfte (26) der Länge einer Seitenwand (14, 16) erstrecken, und daß die andere Hälfte (28) einer Seitenwand so ausgelegt ist, daß sie einen guten Wärmetransport ermöglicht.

5. Computergehäuse nach Anspruch 4, **dadurch gekennzeichnet, daß** sich der Kühlkörper (30) auch über die andere Hälfte (28) einer Seitenwand erstreckt.

6. Computergehäuse nach einem der Ansprüche 1 bis 4, **dadurch gekennzeichnet, daß** der Kühlkörper (30) der linken Seitenwand (14) der Vorderwand (12) benachbart ist und der Kühlkörper (30) der rechten Seitenwand (16) der Rückwand (18) benachbart ist, wobei das Leistungsbauelement (62) des Netzteils (60) mit dem Kühlkörper (30) der linken Seitenwand (14) wärmegekoppelt ist.

7. Computergehäuse nach einem der vorhergehenden Ansprüche, **dadurch gekennzeichnet, daß** der außen liegende Endbereich (39) des Kühlkörpers (30) in einer Ebene mit dem übrigen Bereich (37) der Seitenwand (14, 16) liegt, so daß der Kühlkörper (30) gegenüber der Seitenwand (14, 16) nicht übersteht.

8. Computergehäuse nach Anspruch 7, **dadurch gekennzeichnet, daß** eine Deckplatte (22) vorgesehen ist, die im Bereich der Kühlkörper (30) eine Aussparung (23) aufweist.

9. Computergehäuse nach einem der vorhergehenden Ansprüche, **dadurch gekennzeichnet, daß** zumindest eine Aufnahme für ein Disketten- und/oder optisches Laufwerk derart vorgesehen ist, daß das Laufwerk (70) über dem Netzteil (60) anordbar ist.

10. Computergehäuse nach einem der vorhergehenden Ansprüche, **dadurch gekennzeichnet, daß** die Vorderwand (12) eine ausreichende Dicke aufweist, um einen guten Wärmetransport bereitzustellen.

11. Computergehäuse nach einem der vorhergehenden Ansprüche, **dadurch gekennzeichnet, daß** es aus Aluminium hergestellt ist.

12. Computer mit einem Computergehäuse nach einem der Ansprüche 1 bis 11 und einem Motherboard (50) mit einem Prozessor, mit dem die Flüssigkeits-Kühleinrichtung (80, 82) wärmegekoppelt ist.

13. Computer nach Anspruch 12, **dadurch gekennzeichnet, daß** die Flüssigkeits-Kühleinrichtung einen Kühlkörper (82) aufweist, und eine Einspanneinrichtung (89, 97) vorgesehen ist, die den Kühlkörper (82) auf den Prozessor drückt.

14. Computer nach Anspruch 13, **dadurch gekennzeichnet, daß** die Einspanneinrichtung eine Platte (89) aufweist, die punktförmig auf dem Kühlkörper aufliegt.

## Claims

1. A computer housing with a right-hand and a left-hand side wall (16, 14), a front wall (12), a rear wall (18) and a power supply unit (60) comprising at least one heat-generating power device (62), **characterised in that** the two side walls (14, 16) each support a cooling body (30), wherein the two cooling bodies (30) lie diagonally opposite to each other, the power supply unit (60) is disposed so as to adjoin the front wall (12), wherein the power device (62) is thermally coupled with one of the two cooling bodies (30), and a liquid-cooling device (80) for a processor is thermally coupled with the other one of the two cooling bodies (30).

2. The computer housing according to claim 1, **characterised in that** the liquid-cooling device (80) is designed as a heat-pipe-cooling device (81).

3. The computer housing according to claim 1 or 2, **characterised in that** the cooling body (30) is an integral part of the side walls (14, 16).

4. The computer housing according to claim 3, **characterised in that** the cooling bodies (30) extend across one half (26) of the length of one side wall (14, 16) and **in that** the other half (28) of one side wall is laid out in such a way as to permit good heat transfer.

5. The computer housing according to claim 4, **characterised in that** the cooling body (30) also extends across the other half (28) of one side wall.

6. The computer housing according to one of claims 1 to 4, **characterised in that** the cooling body (30) of the left-hand side wall (14) adjoins the front wall (12) and the cooling body (30) of the right-hand side wall (16) adjoins the rear wall (18), wherein the power device (62) of the power supply unit (60) is thermally coupled with the cooling body (30) of the left-hand side wall (14).

7. The computer housing according to one of the preceding claims, **characterised in that** the external end range (39) of the cooling body (30) lies in one plane with the remaining range (37) of the side wall (14, 16) so that the cooling body (30) does not protrude with respect to the side wall (14, 16).

8. The computer housing according to claim 7, **characterised in that** a cover plate (22) is provided which comprises a recess (23) in the range of the cooling bodies (30).

9. The computer housing according to one of the preceding claims, **characterised in that** at least one holder is provided for a diskette drive and/or an optical drive such that the drive (70) can be arranged above the power supply unit (60).

10. The computer housing according to one of the preceding claims, **characterised in that** the front wall (12) is of a sufficient thickness so as to provide for good heat transfer.

11. The computer housing according to one of the preceding claims, **characterised in that** it is manufactured from aluminium.

12. A computer with a computer housing according to one of claims 1 to 11 and a motherboard (50) with a processor, with which the liquid-cooling device (80, 82) is thermally coupled.

13. The computer according to claim 12, **characterised in that** the liquid-cooling device comprises a cooling body (82) and **in that** a jig (89, 97) is provided which presses the cooling body (82) onto the processor.

14. The computer according to claim 13, **characterised in that** the jig comprises a plate (89) which abuts the cooling body in a punctiform manner.

## Revendications

1. Boîtier d'ordinateur ayant une paroi latérale droite et une paroi latérale gauche (16, 14), une paroi avant (12), une paroi arrière (18) et un bloc d'alimentation (60) qui comporte au moins un composant de puissance (62) générant de la chaleur, **caractérisé en ce que** les deux parois latérales (14, 16) supportent chacune un dissipateur de chaleur (30), les deux dissipateurs de chaleur (30) étant situés diagonalement l'un en face de l'autre, le bloc d'alimentation (60) étant disposé dans le voisinage de la paroi avant (12), le composant de puissance (62) étant couplé thermiquement avec l'un des deux dissipateurs de chaleur (30) tandis qu'un dispositif de refroidissement à liquide (80) destiné à un processeur est couplé thermiquement avec l'autre des deux dissipateurs de chaleur (30).

2. Boîtier d'ordinateur selon la revendication 1, **caractérisé en ce que** le dispositif de refroidissement à liquide (80) est formé en tant que dispositif de refroidissement à caloduc (81).

3. Boîtier d'ordinateur selon la revendication 1 ou 2, **caractérisé en ce que** les dissipateurs de chaleur (30) sont des parties intégrantes des parois latérales (14, 16).

4. Boîtier d'ordinateur selon la revendication 3, **caractérisé en ce que** les dissipateurs de chaleur (30) s'étendent sur la moitié (26) de la longueur d'une paroi latérale (14, 16) et **en ce que** l'autre moitié (28) d'une paroi latérale est conçue de sorte qu'elle permette un bon transport de la chaleur.

5. Boîtier d'ordinateur selon la revendication 4, **caractérisé en ce que** le dissipateur de chaleur (30) s'étend également sur l'autre moitié (28) d'une paroi latérale.

6. Boîtier d'ordinateur selon l'une quelconque des revendications 1 à 4, **caractérisé en ce que** le dissipateur de chaleur (30) de la paroi latérale gauche (14) est situé dans le voisinage de la paroi avant (12) et que le dissipateur de chaleur (30) de la paroi latérale droite (16) est situé dans le voisinage de la paroi arrière (18), le composant
de puissance (62) du bloc d'alimentation (60) étant couplé thermiquement avec le dissipateur de chaleur (30) de la paroi latérale gauche (14).

7. Boîtier d'ordinateur selon l'une quelconque des revendications précédentes, **caractérisé en ce que** la partie d'extrémité (39) du dissipateur de chaleur (30) située à l'extérieur est agencée dans un plan avec la partie restante (37) de la paroi latérale (14, 16) de sorte que le dissipateur de chaleur (30) ne dépasse pas de la paroi latérale (14, 16).

8. Boîtier d'ordinateur selon la revendication 7, **caractérisé en ce qu'**il est prévu une plaque de recouvrement (22) qui comporte un évidement (23) dans la zone des dissipateurs de chaleur (30).

9. Boîtier d'ordinateur selon l'une quelconque des revendications précédentes, **caractérisé en ce qu'**il est prévu au moins un logement pour un lecteur de disquette et/ou un lecteur optique de manière telle que le lecteur (70) puisse être disposé au-dessus du bloc d'alimentation (60).

10. Boîtier d'ordinateur selon l'une quelconque des revendications précédentes, **caractérisé en ce que** la paroi avant (12) présente une épaisseur suffisante pour fournir un bon transport de la chaleur.

11. Boîtier d'ordinateur selon l'une quelconque des revendications précédentes, **caractérisé en ce qu'**il est réalisé en aluminium.

12. Ordinateur doté d'un boîtier d'ordinateur selon l'une quelconque des revendications 1 à 11 et d'une carte mère (50) équipée d'un processeur avec lequel le dispositif de refroidissement à liquide (80, 82) est couplé thermiquement.

13. Ordinateur selon la revendication 12, **caractérisé en ce que** le dispositif de refroidissement à liquide comporte un dissipateur de chaleur (82) et **en ce qu'**il est prévu un dispositif de serrage (89, 97) qui presse le dissipateur de chaleur (82) contre le processeur.

14. Ordinateur selon la revendication 13, **caractérisé en ce que** le dispositif de serrage comporte une plaque (89) qui repose ponctuellement sur le dissipateur de chaleur.
